# EUROPEAN PATENT APPLICATION

(11) **EP 4 681 825 A1**
(43) Date of publication of application: **21.01.2026**
(21) Application number: 25181608.8
(22) Date of filing: 09.06.2025
(51) Int. Cl.: B05D 1/02, C08G 73/06, C08G 73/10, C08J 5/04, C09D 179/08, C08K 7/20, C08K 3/36

(54) **PROCESSABLE POLYIMIDE-PHTHALONITRILE APPLICATION FORMS AND METHODS THEREOF**

(30) Priority: 16.07.2024 US 202418773773
(71) Applicant: The Boeing Company, Arlington, VA 22202 (US)
(72) Inventor: VENTULETH, Michael, Arlington, 22202 (US); DUSTIN, Ashley, Arlington, 22202 (US); NOWAK, Gregory, Arlington, 22202 (US)
(74) Representative: Smart, Jessica Ann

(57) **Abstract**

A method of preparing a processable polyimide-phthalonitrile composition is disclosed, including providing a polyimide-phthalonitrile resin; combining the polyimide-phthalonitrile resin with a first solvent to form a solution, combining the solution with a second solvent, mixing the polyimide-phthalonitrile solution to form a homogeneous mixture, and applying the homogeneous mixture to a substrate. The first solvent has a boiling point greater than 150°C. The second solvent has a boiling point less than 150°C. The method of preparing a polyimide-phthalonitrile composite can include impregnating an additive with a homogeneous resin solution to create one or more pre-impregnated layers, and curing the one or more pre-impregnated layers into a composite material. The composite structure can include a substrate, a polyimide-phthalonitrile resin, and a composite material layer adhered to at least a portion of the substrate.

## Description

### TECHNICAL FIELD

The present teachings relate generally to polyimide-phthalonitrile materials and, more particularly, to materials and processes related to composites made with polyimide-phthalonitrile materials.

### BACKGROUND

High-temperature adhesives are of interest in a range of aerospace applications. Current aerospace systems requiring high temperature adhesives and elastomers require designing around the temperature limitations of available materials. This design activity can impact cost, weight, and system level performance of the aerospace system including present compositions of high-temperature adhesives. Next generation aircraft may include systems or components that can be exposed to unavoidable higher service temperatures which places an even higher premium on improving the properties of these adhesives.

High-temperature adhesives including phthalonitrile resins can be challenging to prepare due to the difficulties in controlling the polymerization and processing conditions of phthalonitrile resins. For example, phthalonitriles have glassy properties, even at room temperatures.

Therefore, it is of interest to develop formulations of temperature-stable polyimide-containing resins in the form of easily applicable pastes, flexible reinforced films, such as polymer with scrim, that are stable and malleable at room temperature, and can be used in prepregs, sprayable solutions or other application methods.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A method of preparing a polyimide-phthalonitrile coating composition is disclosed. The method of preparing a polyimide-phthalonitrile coating composition includes providing a polyimide-phthalonitrile resin, combining the polyimide-phthalonitrile resin with a first solvent to form a solution, combining the solution with a second solvent, mixing the polyimide-phthalonitrile solution to form a homogeneous coating, and applying the homogeneous coating to a substrate. The first solvent has a boiling point greater than 150°C. The first solvent may include dimethyl sulfoxide, N,N-dimethyl formamide, 1-methyl-2-pyrrolidinone, 2-phenoxyethanol, propylene carbonate, triethyl phosphate, or a combination thereof. The second solvent has a boiling point less than 150°C. The second solvent may include acetone, 2-butanone, 2-pentanone, 4-methyl-2-pentanone, n-butyl acetate, methanol, ethanol, toluene, xylene, benzene, or a combination thereof. The method of preparing a polyimide-phthalonitrile coating composition may include incorporating one or more additives into the solution. The additive may include a filler, a dispersant, a flow agent, a catalyst, a surfactant, and a combination thereof. The additive may include a filler and may be selected from the following: silica, polyether etherketone (PEEK), polyether ketoneketone (PEKK), iron oxide, aluminum oxide, glass microspheres, and a combination thereof. The additive may include a catalyst which can include an organic catalyst, a metallic catalyst, and a combination thereof. The catalyst may include diiminoisoindoline. The polyimide-phthalonitrile coating may be used to create a film-based adhesive. A film-based adhesive thickness is from about 0.25 mil to about 30 mil. The film-based adhesive thickness may be measured using calipers.

Another method of preparing a polyimide-phthalonitrile composite is disclosed. The method of preparing a polyimide-phthalonitrile composite includes providing a polyimide-phthalonitrile resin, combining the polyimide-phthalonitrile resin with a first solvent to form a solution, combining the solution with a second solvent, mixing the solution to form a homogeneous coating solution, impregnating an additive with the homogeneous coating solution to create one or more pre-impregnated layers, and curing the one or more pre-impregnated layers into a composite material. Implementations of the method of preparing a polyimide-phthalonitrile composite can include where the first solvent may include dimethyl sulfoxide, N,N-dimethyl formamide, 1-methyl-2-pyrrolidinone, 2-phenoxyethanol, propylene carbonate, triethyl phosphate, and a combination thereof. The second solvent may include acetone, 2-butanone, 2-pentanone, 4-methyl-2-pentanone, n-butyl acetate, methanol, ethanol, toluene, xylene, benzene, and a combination thereof. The method may include using an additive including a filler, a dispersant, a flow agent, a catalyst, a surfactant, and a combination thereof.

A composite structure is disclosed. The composite structure can include a substrate, a polyimide-phthalonitrile resin, and a composite material layer adhered to at least a portion of the substrate. Implementations of the composite structure can include where the substrate includes a metal or metal alloy. The composite material layer may further include glass fibers, carbon fibers, aramid fibers, alumina fibers, ceramic fibers, or a combination thereof.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1A depicts an application of a structural component including an adhesive composition applied to an aerospace vehicle. FIG. 1B is an exploded view of a portion of the aerospace vehicle of FIG. 1A , in accordance with the present disclosure.
FIG. 2 is a flowchart illustrating a process for preparing a polyimide-phthalonitrile coating composition, in accordance with the present disclosure.
FIG. 3 is a flowchart illustrating a process for preparing a polyimide-phthalonitrile composite, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure relates to methods to formulate polyimide-containing phthalonitrile (PIPN) resins into easily applicable pastes, flexible reinforced films, including polymer and scrim structures, that are stable and malleable at room temperature, including prepregs, and sprayable solutions. Such high temperature prepregs can be curable in or out of an autoclave, further expanding applicability and compatibility with various materials and processes commonly used in aerospace or vehicle components or structures. A differentiating factor in materials and processes of the present disclosure is the use of a combination of high and low boiling point solvents to enable solubilization of a PIPN resin, thereby making it amenable to various applicable use forms. Although some lower boiling point co-solvents can solubilize the PIPN in a low viscosity solution, the present method allows for viscoelastic materials or solutions that can be easily buttered, painted, impregnated, or sprayed onto the substrate of interest facilitating the creation of composites and coating of complex geometries. Additionally, this entire process can be performed at room temperature without the need to melt the initial PIPN resin.

Typical polyimide-containing resins are only soluble in higher boiling point solvents such as dimethylsulfoxide (DMSO), dimethylformamide (DMF), and N-methyl-2-pyrrolidone (NMP) which can be difficult to remove via evaporation, and therefore remain in the material until heated to very high temperatures (>200 °C). Through utilizing a lower boiling point co-solvent such as methyl propyl ketone (MPK), methyl isobutyl ketone (MIBK), and/or acetone, the PIPN can be dissolved in a low viscosity solution followed by evaporation of the low boiling point solvent to produce a more processable higher viscosity material. Thus, viscoelastic materials or solutions can be prepared which can be easily buttered, painted, impregnated, or sprayed onto a substrate of interest, facilitating the creation of composites and coating of complex geometries. Additionally, this entire process can be performed at room temperature without the need to melt the initial PIPN resin, which is in powder form. Finally, the resulting high temperature prepregs can be curable in or out of an autoclave, further expanding applicability and compatibility with various materials and processes.

As used herein, "multilayered composite" refers to a composite material including more than one layer of differing materials, which can include, but is not limited to, a polymeric or metal substrate layer having one or more laminations of additional layers incorporated thereon, and the like. A polymeric substrate layer can also include a fiber-reinforced multilaminate composite structure.

As used herein, "imide linking group" can refer to an imide functional group including two acyl groups bound to nitrogen. The compounds including these imide functional groups are structurally related to acid anhydrides, although imides are more resistant to hydrolysis, and lend themselves to incorporation in high-strength polymers, known as polyimides.

The present disclosure provides a method for formulating polyimide-containing phthalonitrile (PIPN) resins into easily applicable pastes, flexible reinforced films, prepregs, and sprayable solutions. The combination of high and low boiling point solvents can solubilize the PIPN resin, making it amenable to various applicable uses or forms. This method offers several advantages over known methods for creating polyimide-based composites and coatings.

The combination of high and low boiling point solvents used in this method can be replaced with other types of solvents, but the effects on the final product would depend on the specific solvents used and their compatibility with the PIPN resin. Some lower boiling point co-solvents such as MPK, MIBK, and/or acetone, can solubilize the PIPN in a low viscosity solution followed by the evaporation of the low boiling point solvent to produce a more processable, higher viscosity material.

The use of additives can impact the properties of the PIPN resin solution and specific additives may be recommended for certain applications. For example, fillers such as silica or PEEK can improve the viscoelastic and/or mechanical properties of the final product, while catalysts such as diiminoisoindoline or amino-functional organic catalysts such as 4,4'-bis(3-aminophenoxy)diphenyl sulfone (mBAPS), bis[4-(4-amino-phenoxy)phenyl]-sulfone (pBAPS), and melamine can accelerate the curing process. In examples, woven fabrics, fibrous additives, cloth materials or scrims can be employed as additives to improve or enhance the properties of the PIPN resin and materials made therefrom.

In examples, the PIPN resin solutions of the present disclosure can be stored for extended periods of time without losing their properties or becoming unstable as long as proper storage conditions are maintained. Storage in a cool, dry place away from direct sunlight and moisture is recommended to prolong shelf life. Alternatively, freezer storage can also be recommended, but is not necessary. The typical viscosity range of the PIPN resin solution is between 100-2000 cPs, depending on the specific formulation and application. A higher viscosity can make it easier to apply the solution using various applicators such as brushes, while a lower viscosity facilitates spray processes.

The disclosure relates to formulating polyimide-containing phthalonitrile (PIPN) resins into easily applicable pastes, flexible reinforced films, prepregs, and sprayable solutions. The specific properties that make PIPN resin suitable for use in this process include its high thermal stability, good electrical insulation, and excellent chemical resistance. These properties make it ideal for use in high-temperature applications such as aerospace components. A process for creating composites with complex geometries and coatings without the need for melting the initial PIPN resin makes this process an interesting alternative to traditional methods.

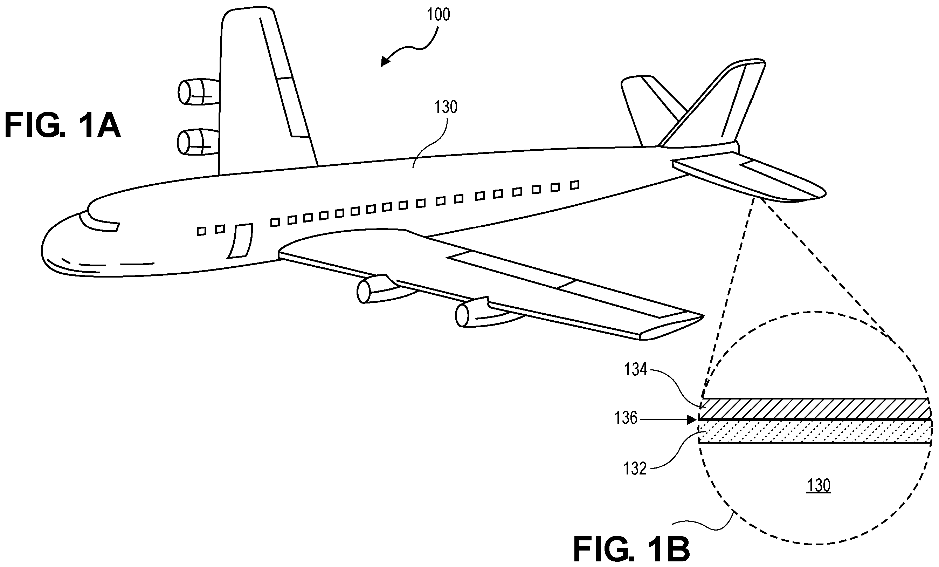

FIG. 1A depicts an application of a structural component including an adhesive composition applied to an aerospace vehicle. FIG. 1B is an exploded view of a portion of the aerospace vehicle of FIG. 1A, in accordance with the present disclosure. An application of the presently disclosed coating composition or method is shown on an aerospace vehicle 100, whereby vehicle substrate 130 is applied with the presently disclosed polyimide-phthalonitrile coating composition. Exploded view FIG. 1B is shown, having vehicle substrate 130 or surface thereof with a substrate surface layer 132 and polyimide-phthalonitrile coating composition layer 136 so as to adhere an additional layer 134 to a surface of the substrate 130, and/or onto a structural component of or onto a portion of a vehicle. In one example the application of the presently disclosed coating composition is directed to an external surface of the aerospace vehicle 100. In examples, additional coating layers, such as paints, coatings, or other protective coatings can be applied upon the polyimide-phthalonitrile coating composition layer 136. It should be noted that substrate surface layer 132 can be optional in certain examples. Of further note is that FIG. 1B is located towards an area of higher heat exposure in a typical aircraft or aerospace vehicle 100, which is where the polyimide-phthalonitrile coating composition layer 136 finds applicability based on its inherently higher use temperature, based in part on the composition and fabrication of the polyimide-phthalonitrile coating composition layer 136. While a location or area of higher temperature use may be shown, other areas or locations in an aerospace vehicle 100 or other structure may be used as well. For example, the use of polyimide-phthalonitrile coating composition layer 136 can be targeted on an aircraft on or near the exhaust or trailing edge, or in other words, an area of downstream, higher heat exposure. The polyimide-phthalonitrile coating composition layer 136 can alternatively be used in other areas, such as in cooler sections of an engine intake. There may further be specialized applications where ceramics or ceramic foams are not desirable, due to their brittleness, and such a polyimide-phthalonitrile coating composition layer as described in the present disclosure may be employed as a desirable alternative. In general, lightweight, high temperature exposed areas, or other high-temperature service parts in a vehicle may use such compositions, as well as hot air exposed portions of a vehicle or components thereof used for cooling or heating, such as, but not limited to ductwork used in the diversion of hot or high-temperature air or other fluids.

Composite structures of the present disclosure can include a substrate, one or more polyimide-phthalonitrile resin or layers thereof, and an additional composite material layer adhered to at least a portion of the substrate using the polyimide-phthalonitrile resin or layers thereof. In examples, the substrate comprises a metal or metal alloy, for example, aluminum, stainless steel, titanium, low carbon steel, aerospace grade metals, or alloys thereof. Suitable substrates can alternatively comprise organic polymers such as PEEK, PEKK, or Bismaleimides (BMI) resins, or inorganic materials including ceramics, such as, for example, silicon dioxide (SiO₂) or aluminum oxide (Al₂O₃). The substrate can be metallic, organic, or inorganic, wherein the substrate is flat and/or has a low radius of curvature and/or has a high radius of curvature, depending on the nature of the application or the aerospace component in which it is used.

In other examples, composite material layers can include glass fibers, carbon fibers, aramid fibers, alumina fibers, ceramic fibers, or a combination thereof. Examples of polymer materials that can be used (e.g., as a substrate) that undergoes surface coating with a metallic coating or circuit layer in accordance with the present disclosure include polymer materials that act as a matrix in combination with one or more types of fibers or other reinforcing or functional additives. In one example, materials useful for the practice of the present disclosure include fiber-reinforced plastics (FRP) comprising a polymer material in combination with an inorganic fiber such as fibers of carbon, carbon nanotubes, graphite, fiberglass, glass, metals, metal alloys, or metalized fibers and metal coated glass fibers, alumina fiber or boron fiber. In one example, the fiber reinforced plastic can comprise organic fiber such as a nylon fiber or aramid fiber. In one example, the fiber reinforced plastic can comprise organic fiber and/or inorganic fiber blended into a thermosetting polymer, such as an epoxy resin material. In one example, a portion of a multilayered composite laminate may be constructed of multiple layers of thermoset layers, fiber layers, or a mixture thereof.

In one example, a carbon fiber reinforced plastic (CFRP) or glass fiber reinforced plastic (GFRP) as the polymer article made therefrom is used as a material suitable for aircraft structures or the like. However, the present disclosure is not restricted to these types of materials or any particular arrangement, and articles formed from other polymers can also be used in the presently disclosed process of the present disclosure. In one example, the polymer substrate comprises a crystalline polymer. Crystalline polymers provide high temperature resistance as well as chemical resistance to FRPs. For example, epoxy-based polymers are crystalline and can be thermally stable up to temperatures as high as 260°C and possibly higher depending on the specific formulation and additives used. In another example, the polymer substrate comprises a semi-crystalline polymer. Semi-crystalline polymers provide the benefits of crystalline polymers along with ductility and processing advantages to FRPs. In yet another example, the polymer substrate comprises an amorphous polymer. Amorphous polymers provide resiliency, ductility and processing advantages to FRPs.

In one example the polymer substrate is selected from epoxies, phenolics, polyesters, polyesters, ureas, melamines, polyamides, polyimides, poly-ether-ether-ketones (PEEK), poly-ether-ketone-ketone (PEKK), polyetherimide (PEI), polyphthalamide, polyphthalates, polysulfone, polyurethanes, chlorinated polymers, fluorinated polymers, polytetrafluoroethylene, polycarbonates, liquid crystal polymers, partially crystalline aromatic polyesters, and modified versions thereof containing one or more fillers or reinforcement materials selected from carbon, carbon nanotubes, graphite, carbon fibers, graphite fibers, fiberglass, glass fibers, metals, metal alloys, metalized fibers and metal coated glass fibers. It should be noted that the polymer substrates must be stable during the high temperature cure of the PIPNs or combinations thereof. Alternatively, the PIPN can be under-cured or adapted to accommodate lower temperature substrates in certain examples.

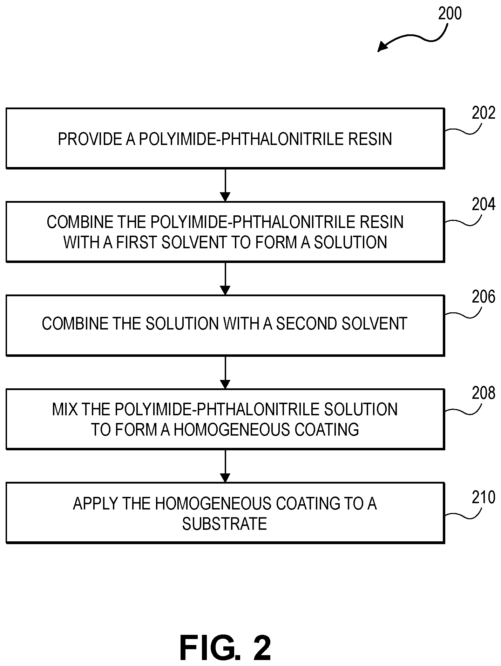

FIG. 2 is a flowchart illustrating a process for preparing a polyimide-phthalonitrile coating composition, in accordance with the present disclosure. A method 200 of preparing a polyimide-phthalonitrile coating composition is described, where the method includes providing a polyimide-phthalonitrile resin 202, combining the polyimide-phthalonitrile resin with a first solvent to form a solution 204, combining the solution with a second solvent 206, mixing the polyimide-phthalonitrile solution to form a homogeneous coating 208 or homogenous mixture, and applying the homogeneous coating to a substrate 210. In some optional examples, the method 200 can include adding additives to the solution, storing the homogeneous mixture or coating solution, creating a film adhesive, or storing the film adhesive. In examples, the method can include removing the second solvent by evaporation after applying the homogenous mixture to a substrate, and curing the processable polyimide-phthalonitrile composition at an elevated temperature. This provides for further processability or workability of the composition while significantly increasing the viscosity of the solution or homogenous mixture. In examples, the polyimide-phthalonitrile is soluble in one or more organic solvents. The first solvent can have a boiling point greater than 150 °C, wherein the first solvent can include dimethyl sulfoxide, N,N-dimethyl formamide, 1-methyl-2-pyrrolidinone, 2-phenoxyethanol, propylene carbonate, triethyl phosphate, or a combination thereof. In examples, the second solvent has a boiling point less than 150 °C, and wherein the second solvent can include acetone, 2-butanone, 2-pentanone, 4-methyl-2-pentanone, n-butyl acetate, methanol, ethanol, toluene, xylene, benzene, or a combination thereof.

The one or more additives that can be added to the solution can include a filler, a dispersant, a flow agent, a catalyst, a surfactant, or a combination thereof. Fillers can be or include silica, PEEK, PEKK, iron oxide, aluminum oxide, glass microspheres, carbon fibers or whiskers, or a combination thereof. Catalysts can include an organic catalyst or a metallic catalyst or combinations thereof, where illustrative examples include diiminoisoindoline, or amino-functional, phenolic-functional catalysts, such as 4,4'-bis(3-aminophenoxy)diphenyl sulfone (mBAPS), bis[4-(4-amino-phenoxy)phenyl]-sulfone (pBAPS), melamine, or hydroxyquinone. Metallic catalysts can include copper-containing, iron-containing, zinc-containing, nickel-containing, or palladium-containing catalysts such as copper acetylacetonate, palladium acetylacetonate, cobalt acetylacetonate, nickel acetylacetonate, iron acetylacetonate, or similar combinations.

In examples where the polyimide-phthalonitrile coating is further formed into a film-based adhesive, the film-based adhesive thickness can be from about 0.25 mil to about 30 mil, or from 0.25 mil to about 20 mil or from about 1 mil to about 15 mil. The film adhesive can either be supported or unsupported. In examples, the support can be comprised of glass fibers, carbon fibers, aramid fibers, alumina fibers, ceramic fibers, or a combination thereof. The support can be unidirectional, woven, or non-woven, in examples. In other examples, the coating composition is in the form of a paste or a spray solution, in which case the paste has a shear viscosity greater than 1,000 cPs at 1 Hz. For a spray solution, the coating composition has a shear viscosity less than 300 cPs at 1 Hz. Shear viscosity measurements were made using a Malvern Kinexus rheometer equipped with parallel plate geometry. The upper and lower plates were 40mm and 65mm in diameter, respectively, and the gap size was set to 0.2mm. Measurements were made at ambient temperature (~23°C / 73°F). A shear sweep from 0.1 Hz to 1,000 Hz was conducted over the course of five minutes with the reported value coming from the measurement at 1 Hz. In examples where the homogeneous mixture or coating solution is stored, it can be stored at room temperature, it can be refrigerated, or frozen. As such, the storage temperature can be from about -10°C to about 40°C, or from about 10°C to about 25°C, or from about 10°C to about 15°C. In alternate examples, paste adhesives, spray coating, and prepreg materials can also be formulated from compositions as described herein. It should be noted that viscosity measurements are typically conducted at or near room temperature, or at about 10°C to about 25°C.

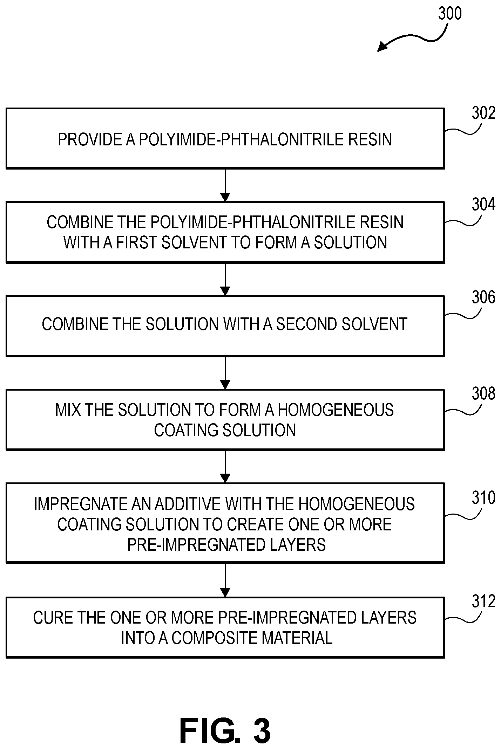

FIG. 3 is a flowchart illustrating a process for preparing a polyimide-phthalonitrile composite, in accordance with the present disclosure. The method 300 of preparing a polyimide-phthalonitrile composite, includes providing a polyimide-phthalonitrile resin 302, combining the polyimide-phthalonitrile resin with a first solvent to form a solution 304, combining the solution with a second solvent 306, mixing the solution to form a homogeneous mixture or coating solution 308, impregnating an additive with the homogeneous mixture or coating solution to create one or more pre-impregnated layers 310, and curing the one or more pre-impregnated layers into a composite material 312. The method 300 of preparing a polyimide-phthalonitrile (PIPN) composite can include the use of similar solvents as described herein with regard to the method shown and described in FIG. 2. Again, optional steps of incorporating additives to the solution, storing the homogeneous mixture or coating solution, and other optional steps can be included. When impregnating a fiber, fabric, scrim, or cloth with the homogeneous mixture or coating solution to create a PIPN prepreg material, the optional step of stacking or laminating multiple PIPN prepreg sheets can be used to create a PIPN prepreg stack, which can further be cured to form the prepreg or stack into a composite layered material. It should be noted that that the prepreg material remains flexible at room temperature due to the remaining high boiling point solvent. Typical uncured phthalonitrile materials can be brittle and glassy. In some examples, the impregnation step can be a static process or a continuous process. The fiber, fabric, scrim, or cloth matrix can include glass fibers, carbon fibers, aramid fibers, alumina fibers, ceramic fibers, or a combination thereof, and can alternatively be unidirectional, woven, or non-woven in nature. The resulting prepreg thickness can be from about 0.5 mil to about 30 mil, from about 1 mil to about 20 mil, or from about 0.5 mil to about 50 mil, or even higher, depending on how many layers are incorporated into the multilayered laminate composite material. In still other examples, the PIPN prepreg sheets can be stacked or laminated in the same direction or in varying directions (off-axis), ranging from +/- 0 deg to +/- 90 deg. The direction refers generally to a direction of orientation of the fibers or weave of the fabric when incorporated into each layer of a prepreg material. The PIPN prepreg sheets can be laminated into 2 ply, 3 ply, 6 ply, 10 ply, 15 ply, 30 ply, 75 ply, 100 ply, 200 ply, and up to 500 ply layers in examples. In some examples, the layers may be laminated such that hundreds of plies up to and including up to over 3" thick can be fabricated. Additionally, while materials including the phthalonitrile chemistry do not off-gas during the curing process, residual high boiling point solvents in the prepreg can evolve. This can be mitigated by carefully controlling the curing process. In examples, impregnation can be conducted at room temperature (from about 20°C to about 30°C), and thus the high boiling point solvent is not removed prior to the curing step. Furthermore, the curing step of the process can be performed either with or without an autoclave. The residual higher-boing point solvent still residing in the material when processed below a boiling point of the higher boing point solvent provides additional flexibility and processability for the materials, composites or adhesives of the present disclosure. In examples of the method of the present disclosure, a quantity of the higher temperature boiling point solvent remains in the material after an initial process step of evolving the lower temperature boiling point solvent, enabling further manipulation or forming of the material, composite or component made utilizing the process. In examples, one or more process steps may include the presence of the higher temperature boiling point solvent prior to final curing of the material or composite. In such examples, the higher temperature boiling point solvent is kept in the material until curing. A partial cure can be conducted, while retaining a portion of the higher temperature boiling point solvent in the material, which can facilitate manipulating or forming the material if needed. For example, prior to curing, from about 10% by weight to about 90% by weight, or from about 25% by weight to about 75% by weight, or from about 50% by weight to about 75% by weight of the original amount of the higher temperature boiling point solvent can remain in the material. It should be noted that optionally, any of the aforementioned processing or method steps can be conducted inside or outside of an autoclave.

For curing processes of materials including the PIPN formulations or laminates of the present disclosure, the PIPN prepreg or PIPN prepreg stack is cured in an autoclave or other suitable oven. In other examples, the material can be cured out of an autoclave, such as in a vacuum bag, under vacuum pressure. In examples, the materials can be cured for 1 to 48 hours, or from about 1 to about 24 hours, or from about 1 to about 6 hours, depending on the cure temperature used. In examples, the temperature can be ramped from about 200°C to about 450 °C, from about 200°C to about 400 °C, or from about 250°C to about 350 °C, with pressure varying from about 2 psi to about 150 psi, or from about 10 psi to about 100 psi, or from about 25 psi to about 75 psi. As some of the prepreg or laminate structures may require conformance to underlying substrates or other components, the cured PIPN composite can be flat, have a low radius of curvature, or have a high radius of curvature, suitable for use in an aerospace component.

### Examples

**Materials:** 4,4'-(hexafluoroisopropylidene)diphthalic anhydride (6FDA) and Bis(3-aminophenyl) sulfone (3-APS) were supplied by TCI Chemicals. 4-aminophthalonitrile (AmPN) was supplied by Combi Blocks. N-methyl-2-pyrrolidone (NMP), 2-phenoxyethanol, and 2-pentanone were procured from Sigma Aldrich. 4,4'-bis(3-aminophenoxy)diphenyl sulfone (m-BAPS) was obtained from TCI Chemicals. Ketaspire KT-820 UFP was purchased from Solvay Specialty Polymers and used as received. Aerosil^{®} R 972 fumed silica was purchased from Evonik Resource Efficiency GmbH and used as received. RM-1005 was supplied by Renegade Materials. Bisphenol A PEEK oligomeric phthalonitrile composition (including 3% by weight m-BAPS) was purchased from the United States Naval Research Laboratory.

**Example 1:** Synthesis of poly(imide-phthalonitrile); (PIPN-6F). Bis(3-aminophenyl) sulfone (4.00 g, 6 equivalents) and NMP (52 g) were added to a dried 3-neck round-bottomed flask equipped with a mechanical stirrer and a nitrogen inlet. The mechanical stirrer speed was set to 200 rpm. Once the contents were dissolved, the flask was heated to 100°C then 6FDA (8.35 g, 7 equivalents) was added and stirred for 10-30 minutes, forming a more viscous orange solution. AmPN (0.81 g, 1.05 equivalents) was then added and stirred for an additional 30 minutes. The reaction mixture was heated to 180°C for 5-6 hours, forming a dark reddish-brown solution. The reaction was cooled and precipitated into methanol, and allowed to soak for 72 hours. The off-white powder was dried at room temperature for at least 48 hours then in vacuo at 60-80°C for at least 24 hours.

**Example 2:** General Post Curing Procedure. Examples are post-cured under nitrogen in a box furnace using the following cure schedule: 300°C (3 hours), 350°C (3 hours), 375°C (3 hours), 400°C (2 hours).

**Example 3:** PIPN6-6F Paste Formulation. 4.00 g of **Example 1,** 0.12 g of m-BAPS, and three 0.2" diameter glass beads were added to a mixing cup and mixed for 1 minute at 800 rpm. 3.00 g of 2-phenoxyethanol and 1.00 g of 2-pentanone were added and subsequently mixed for 6 minutes at 1500 rpm. The resulting solution is a translucent and viscous paste that can be buttered onto a substrate using a spatula or similar tool. Once applied, this formulation was cured according to **Example 2.**

**Example 4:** Spray Formulation. 15.00 g of **Example 1,** 0.45 g of m-BAPS, 0.04 g of Aerosil^{®} R972, and 1.50 g of Ketaspire KT-820 UFP were added to a mixing cup and mixed for 1 minute at 800 rpm. 12.00 g of 2-phenoxyethanol and 33.00 g of 2-pentanone were added and subsequently mixed for 8 minutes at 2000 rpm. The resulting solution was poured into a spray cup containing a 200-mesh screen for filtration and is ready to be sprayed using an HVLP spray gun. Once applied, this formulation was cured according to **Example 2.**

**Example 5:** Flexible Film. 32.00 g of **Example 1,** 0.96 g of m-BAPS, 0.08 g of Aerosil^{®} R972, and 3.20 g Ketaspire KT-820 UFP were added to a mixing cup and mixed for 1 minute at 800 rpm. 24.00 g of 2-phenoxyethanol, 8.00 g of 2-pentanone, and five 0.2" diameter glass beads were added and subsequently mixed for 2 minutes at 1200 rpm, 2 minutes at 1500 rpm, and 2 minutes at 2000 rpm. 24.00 g of 2-pentanone was added and the solution was mixed for 1 minute at 1200 rpm, 1 minute at 1500 rpm, and 2 minutes at 2000 rpm. The solution was then filtered through a 200-mesh screen. A 1 mil thick glass scrim was placed onto a silanized release film with 30 mil shims taped along the edge. The resulting solution was poured onto the scrim and a glass rod was used to cast the solution at a 30-mil wet thickness. The solution was allowed to dry in a hood for two days. The resultant film is room temperature flexible. Once applied, this formulation was cured according to **Example 2.**

**Example 6:** Cured Prepreg Laminate - 1 ply. 160.00 g of **Example 1,** 4.80 g m-BAPS, 79.00 g 2-phenoxyethanol, 33.00 g of 2-pentanone, and six 0.2" diameter glass beads are added to a mixing cup and centrifugally mixed for 6 minutes at 1600 rpm. An additional 66.00 g of 2-pentanone is added and the solution is mixed for 15 minutes at 1600 rpm. The entire process is repeated twice more creating three separate solutions. All three solutions are filtered through a 36-mesh screen into one container. A 2' x 3' Astroquartz III cloth (10 mils thick) is taped onto a silanized release film. The filtered solution is poured onto the cloth and spread using a grooved laminating roller to promote penetration of the solution into the cloth. The sample is allowed to air dry for one day in a hood upon which it is removed from the release layer and turned over. The backside is allowed to dry overnight. The resulting film is a room temperature flexible prepreg.

**Cure conditions:** The cure conditions for both the 1 ply and the 6 ply laminates were identical except that the 1 ply used an aluminum caul sheet to apply pressure, although a steel sheet can also be used. To minimize resin bleed, the dams were butted up against the 1 ply. In the subsequent runs, a 1/16th to a 1/32nd gap around all of the laminate was provided so that the caul sheet could freely move to provide the best consolidation.

**Example 7:** Cured Prepreg Laminate - 6 plies. 160.00 g of **Example 1**, 4.80 g m-BAPS, 79.00 g 2-phenoxyethanol, 33.00 g of 2-pentanone, and six 0.2" diameter glass beads are added to a mixing cup and centrifugally mixed for 6 minutes at 1600 rpm. An additional 66.00 g of 2-pentanone is added and the solution is mixed for 15 minutes at 1600 rpm. The entire process is repeated twice more creating three separate solutions. All three solutions are filtered through a 36-mesh screen into one container. A 2' x 3' Astroquartz III cloth (10 mils thick) is taped onto a silanized release film. The filtered solution is poured onto the cloth and spread using a grooved laminating roller to promote penetration of the solution into the cloth. The sample is allowed to air dry for one day in a hood upon which it is removed from the release layer and turned over. The backside is allowed to dry overnight. The resulting film is a room temperature flexible prepreg.

**Cure conditions:** For this cure it was ensured that the caul sheet was slightly higher, i.e. if the dams are 0.5" thick, the layup, bleeder films and caul sheet are ≥0.6 inches. This is important because if the lay-up, films, and caul sheet are flush, then when the pressure is applied during the cure cycle, the caul sheet would dip below the height of the dams and the laminate could encounter what is called "bridging". This means the outside perimeter of the laminate would not receive full pressure and thus would not be fully consolidated, which is understood by those skilled in the art.

**Bagging sequence:** A bagging sequence is pertinent to the present disclosure. For a typical cure a steel surface with a 240 RHR (roughness-height-rating) or better surface is desirable. Upon the steel surface a piece of Kapton^{®} is applied over the surface where the laminate will be cured. The Kapton^{®} is be treated with a high temperature mold release (Frekote 700 NC or equivalent), which is applied in 4 coats alternating 90° wipes allowing the release to flash approximately 5 minutes per application. The mold released film is subsequently baked at 250°F for 30 minutes. Once cool, the released Kapton^{®} film is taped to the steel tool surface using Kapton^{®} tape. A porous Armalon^{®} (CHR-3TLL or equiv.) layer can be used as a peel ply, if needed. The collated laminate is then placed upon the peel ply, if needed. One or two additional CHR-3TLL layers can be applied on top of the laminate, one as a peel ply and one as a breather ply to allow volatile escape. A Frekote^{®} treated steel caul sheet, which matches the laminate dimensions, is then applied to the stack. The aluminum, steel, or other high temperature metal dam (which also has been heat treated with Frekote 700 NC) is then placed around the perimeter of the laminate. It is desirable to have a 1/32nd to 1/16th inch gap around the laminate perimeter so that the caul sheet is not impeded during the cure cycle, although the laminate stack with the caul sheet can be a "butted up" fit. The caul sheet, in this case steel, should be at least 0.090" in thickness and protrude above the top to the perimeter dam material (i.e. proud) so that upon autoclave consolidation, the laminate stack can adequately receive the applied pressure. This will ameliorate "bridging" which can occur when bagging materials hinder full compaction. An inner Kapton^{®} bag is taped to the perimeter dam material and an "X" shaped cut is made (approximately 0.5 inches) to allow volatile release. Multiple cuts may be required depending upon the overall part size. Those skilled in the art will be familiar with this process. An outer breather cloth, minimum of 6 plies of 1000 glass or better, (i.e. 0.060 inches or thicker) can be used as a medium to both remove volatiles as well as a medium for vacuum to be applied. The outer bag is Kapton^{®}, typically 0.060 inches or thicker is used. The Kapton^{®} bag will adhere to the steel tool surface using a high temperature tacky tape sealant such as Schnee Morehead 5160 or equivalent. For large parts with compound and/or complex curvature, multiple bagging pleats can be used to allow the Kapton^{®} bag to conform to the outer tool surface. It is recommended but not required that an additional layer of tacky tape seal the outer edge and this is then sealed with Kapton^{®} tape. Prior to the introduction of the part to the autoclave, a vacuum leak test is performed and a vacuum of 25 in. Hg (or better) is conducted to begin the autoclave consolidation.

**Autoclave program:** An exemplary autoclave program includes the following program, but ranges in temperature, time, and pressure as noted herein are applicable as well. An initial stage of room temperature (RT, approximately 20°C ± 5°C) to 550°F at 2°F/min (at full vacuum), holding at 550°F ± 10°F as long as it takes to apply desired pressure, at 550°F add 50 PSI. After 50 PSI is reached, vent vacuum at 15 PSI, followed by a ramp to 550°F for 30 minutes, then ramped to 572°F at 2°F/min, holding at 572°F ± 10°F for 3 hours. Next, the temperature is ramped from 572°F to 662°F at 2°F/min and held at 662°F ±10°F for 3 hours. Next, the autoclave is ramped from 662°F to 707°F at 2°F/min and held at 707°F ± 10°F for 3 hours, then ramped from 707°F to 752°F at 2°F/min and held at 752°F ± 10°F for 2 hours. Finally the autoclave is cooled from 752°F to RT over approximately 6 hours. The pressure can be dumped, or decreased when the temperature is at or below 200°F.

### Characterization

**Pastes:** Paste formulations allow for room temperature application to a variety of substrates while maintaining good tack. They are too viscous to be applied with a brush and must instead be buttered on using a spatula or similar tool. The viscosity allows for application onto a vertical substrate without experiencing significant sagging prior to post cure. Final viscosity can be adjusted by changing the ratio of solvents added. If sealed, they maintain their viscosity in excess of 14 days although it may require a quick mix prior to application. Pastes can be post cured to produce void free thermosets.

**Film:** Film formulation allows for room temperature application onto a variety of fabrics. It can be stored in a sealed container and maintain its flexibility in excess of 14 days. Freezer storage is recommended for long-term durations to prevent sagging. Prepreg can be cut to shape and molded onto complex geometries at room temperature due to high flexibility. Prepreg formulation can be post cured to produce a void free thermoset.

**Spray:** Spray formulations allow for room temperature application onto a variety of substrates. Spraying deposits a thin film layer onto the desired substrate and can even be performed on a vertical substrate without sagging. Thicknesses of 0.1 mil up to 5 mils, or from about 0.1 mils to about 2.5 mils can be readily achieved. Sprayed samples can be maintained at room temperature in excess of seven days between spraying and post curing without issue. Spray formulations can be post cured to produce a void free thermoset.

**Prepreg:** Prepreg formulations allow for the preparation of room temperature flexible composites that can be stacked and laminated using traditional layup processes. The preparation techniques allow for the impregnation of a variety of materials such as carbon fiber, glass fiber, etc. using a PIPN solution at room temperature. Based on the nature of the PIPN, the uncured prepreg can be stored at room temperature without furthering the polymerization process. Due to the retention of solvent, the prepreg maintains enough flexibility to be conformed to complex geometries during the layup process. This material can then be cured either in an autoclave or using out of autoclave methods. With careful control of the processing conditions during curing, a void-free thermoset can be obtained.

The present disclosure provides an adhesive that can be used with prepregs or composites and used at higher service temperatures as compared to previously known polymeric adhesive or prepregs. When solvents evaporate during processing, they are immediately hard and brittle materials. In this hard and brittle state, putting the materials together to form composite structures or pre-preg materials can be more difficult in terms of processability. The present disclosure enables dissolving the polymers into solution and impregnating the polymer solution into a carrier, such as a fabric, fiber or cloth. The lower boiling point solvents help to dissolve the polymer, while one or more higher boiling point solvents remain in the material. The polymer solution can be impregnated into a carrier material, where the low boiling point solvents flash off, leaving high boiling point solvent and polymer, creating a flexible prepreg material, which can then be formed into a composite. Polyimide-phthalonitrile is of interest, due to its inherent high temperature stability, which can result in the creation of high temperature stable composites with more facile processability as compared to ceramics or other high-service temperature materials. While typical polyimides are useful up to 500°F to 650°F, Polyimide-phthalonitrile copolymers can be exposed to 650°F, 700°F, 750°F to about 1000°F for brief excursions.

While the present teachings have been illustrated with respect to one or more implementations, alterations and/or modifications may be made to the illustrated examples without departing from the scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with the scope of the present teachings being indicated by the following claims.

Further, the disclosure comprises the subject matter described in the following listed clauses.

### Clauses

1. A method of preparing a processable polyimide-phthalonitrile composition, the method comprising:
providing a polyimide-phthalonitrile resin;
combining the polyimide-phthalonitrile resin with a first solvent to form a polyimide-phthalonitrile solution;
combining the solution with a second solvent;
mixing the polyimide-phthalonitrile solution to form a homogeneous mixture; and
applying the homogeneous mixture to a substrate.

2. The method of preparing a polyimide-phthalonitrile coating composition of clause 1, further comprising:
removing the second solvent by evaporation after applying the homogenous mixture to a substrate; and
curing the processable polyimide-phthalonitrile composition.

3. The method of preparing a processable polyimide-phthalonitrile composition of clauses 1 or 2, wherein the first solvent has a boiling point greater than 150 °C.

4. The method of preparing a processable polyimide-phthalonitrile composition of any of clauses 1 to 3, wherein the first solvent comprises dimethyl sulfoxide, N,N-dimethyl formamide, 1-methyl-2-pyrrolidinone, 2-phenoxyethanol, propylene carbonate, triethyl phosphate or a combination thereof.

5. The method of preparing a processable polyimide-phthalonitrile composition of any of clauses 1 to 4, wherein the second solvent has a boiling point less than 150 °C.

6. The method of preparing a processable polyimide-phthalonitrile composition of any of clauses 1 to 5, wherein the second solvent comprises acetone, 2-butanone, 2-pentanone, 4-methyl-2-pentanone, n-butyl acetate, methanol, ethanol, toluene, xylene, benzene, or a combination thereof.

7. The method of preparing a processable polyimide-phthalonitrile composition of any of clauses 1 to 6, further comprising incorporating one or more additives into the solution.

8. The method of preparing a processable polyimide-phthalonitrile composition of clause 7, wherein the additive is selected from a group consisting of a filler, a dispersant, a flow agent, a catalyst, a surfactant, and a combination thereof.

9. The method of preparing a processable polyimide-phthalonitrile composition of clause 7 or clause 8, wherein the additive comprises a filler and is selected from the group consisting of silica, PEEK, PEKK, iron oxide, aluminum oxide, glass microspheres, and a combination thereof.

10. The method of preparing a processable polyimide-phthalonitrile composition of any of clauses 7 to 9, wherein the additive comprises a catalyst and is selected from the group consisting of an organic catalyst, a metallic catalyst, and a combination thereof.

11. The method of preparing a processable polyimide-phthalonitrile composition of clause 10, wherein the catalyst comprises diiminoisoindoline.

12. The method of preparing a processable polyimide-phthalonitrile composition of any of clauses 1 to 11, wherein the processable polyimide-phthalonitrile comprises a film-based adhesive.

13. The method of preparing a processable polyimide-phthalonitrile composition of clause 12, wherein a film-based adhesive thickness is from about 0.25 mil to about 30 mil.

14. A method of preparing a polyimide-phthalonitrile composite, the method comprising:
providing a polyimide-phthalonitrile resin;
combining the polyimide-phthalonitrile resin with a first solvent to form a solution;
combining the solution with a second solvent;
mixing the solution to form a homogeneous mixture;
impregnating an additive with the homogeneous mixture to create one or more pre-impregnated layers; and
curing the one or more pre-impregnated layers into a composite material.

15. The method of preparing a polyimide-phthalonitrile composite of clause 14, wherein the first solvent is selected from the group consisting of dimethyl sulfoxide, N,N-dimethyl formamide, 1-methyl-2-pyrrolidinone, 2-phenoxyethanol, propylene carbonate, triethyl phosphate, and a combination thereof.

16. The method of preparing a polyimide-phthalonitrile composite of clause 14 or clause 15, wherein the second solvent is selected from the group consisting of acetone, 2-butanone, 2-pentanone, 4-methyl-2-pentanone, n-butyl acetate, methanol, ethanol, toluene, xylene, benzene, and a combination thereof.

17. The method of preparing a polyimide-phthalonitrile composite of any of clauses 14 to 16, further comprising an additive selected from a group consisting of a filler, a dispersant, a flow agent, a catalyst, a surfactant, and a combination thereof.

18. A composite structure, comprising:
a substrate
a polyimide-phthalonitrile resin; and
a composite material layer adhered to at least a portion of the substrate.

19. The composite structure of clause 18, wherein the substrate comprises a metal or metal alloy.

20. The composite structure of clause 18 or clause 19, wherein the composite material layer comprises glass fibers, carbon fibers, aramid fibers, alumina fibers, ceramic fibers, or a combination thereof.

21. A composite structure as prepared by the method of any one of clauses 1 to 17 , comprising:
a substrate
a polyimide-phthalonitrile resin; and
a composite material layer adhered to at least a portion of the substrate.

## Claims

1. A method of preparing a processable polyimide-phthalonitrile composition, the method comprising:
providing a polyimide-phthalonitrile resin;
combining the polyimide-phthalonitrile resin with a first solvent to form a polyimide-phthalonitrile solution;
combining the solution with a second solvent;
mixing the polyimide-phthalonitrile solution to form a homogeneous mixture; and
applying the homogeneous mixture to a substrate.

2. The method of preparing a polyimide-phthalonitrile coating composition of claim 1, further comprising:
removing the second solvent by evaporation after applying the homogenous mixture to a substrate; and
curing the processable polyimide-phthalonitrile composition.

3. The method of preparing a processable polyimide-phthalonitrile composition of claims 1 or claim 2, wherein the first solvent has a boiling point greater than 150 °C.

4. The method of preparing a processable polyimide-phthalonitrile composition of any of claims 1 to 3, wherein the first solvent comprises dimethyl sulfoxide, N,N-dimethyl formamide, 1-methyl-2-pyrrolidinone, 2-phenoxyethanol, propylene carbonate, triethyl phosphate or a combination thereof.

5. The method of preparing a processable polyimide-phthalonitrile composition of any of claims 1 to 4, wherein the second solvent has a boiling point less than 150 °C.

6. The method of preparing a processable polyimide-phthalonitrile composition of any of claims 1 to 5, wherein the second solvent comprises acetone, 2-butanone, 2-pentanone, 4-methyl-2-pentanone, n-butyl acetate, methanol, ethanol, toluene, xylene, benzene, or a combination thereof.

7. The method of preparing a processable polyimide-phthalonitrile composition of any of claims 1 to 6, further comprising incorporating one or more additives into the solution.

8. The method of preparing a processable polyimide-phthalonitrile composition of claim 7, wherein the additive is selected from a group consisting of a filler, a dispersant, a flow agent, a catalyst, a surfactant, and a combination thereof.

9. The method of preparing a processable polyimide-phthalonitrile composition of claim 7 or claim 8, wherein the additive comprises a filler and is selected from the group consisting of silica, PEEK, PEKK, iron oxide, aluminum oxide, glass microspheres, and a combination thereof.

10. The method of preparing a processable polyimide-phthalonitrile composition of any of claims 7 to 9, wherein the additive comprises a catalyst and is selected from the group consisting of an organic catalyst, a metallic catalyst, and a combination thereof, optionally wherein the catalyst comprises diiminoisoindoline.

11. The method of preparing a processable polyimide-phthalonitrile composition of any of claims 1 to 10, wherein the processable polyimide-phthalonitrile comprises a film-based adhesive, optionally wherein the film-based adhesive has a thickness of from about 0.0064 mm (0.25 mil) to about 0.76 mm (30 mil).

12. A method of preparing a polyimide-phthalonitrile composite, the method comprising:
providing a polyimide-phthalonitrile resin;
combining the polyimide-phthalonitrile resin with a first solvent to form a solution;
combining the solution with a second solvent;
mixing the solution to form a homogeneous mixture;
impregnating an additive with the homogeneous mixture to create one or more pre-impregnated layers; and
curing the one or more pre-impregnated layers into a composite material.

13. The method of preparing a polyimide-phthalonitrile composite of claim 12:
(a) wherein the first solvent is selected from the group consisting of dimethyl sulfoxide, N,N-dimethyl formamide, 1-methyl-2-pyrrolidinone, 2-phenoxyethanol, propylene carbonate, triethyl phosphate, and a combination thereof; and/or
(b) wherein the second solvent is selected from the group consisting of acetone, 2-butanone, 2-pentanone, 4-methyl-2-pentanone, n-butyl acetate, methanol, ethanol, toluene, xylene, benzene, and a combination thereof; and/or
(c) further comprising an additive selected from a group consisting of a filler, a dispersant, a flow agent, a catalyst, a surfactant, and a combination thereof.

14. A composite structure, comprising:
a substrate
a polyimide-phthalonitrile resin; and
a composite material layer adhered to at least a portion of the substrate, optionally wherein:
(a) the substrate comprises a metal or metal alloy; and/or
(b) the composite material layer comprises glass fibers, carbon fibers, aramid fibers, alumina fibers, ceramic fibers, or a combination thereof.

15. A composite structure as prepared by the method of any one of claims 1 to 13, optionally wherein the composite structure comprises:
a substrate
a polyimide-phthalonitrile resin; and
a composite material layer adhered to at least a portion of the substrate.
